Europäisches Patentamt

European Patent Office

Office européen des brevets

(11) Veröffentlichungsnummer: **0 295 508**
**A1**

## (12) EUROPÄISCHE PATENTANMELDUNG

(21) Anmeldenummer: 88108851.2

(22) Anmeldetag: 03.06.88

(51) Int. Cl.⁴: **B64D 11/02 , E03D 5/00**

(30) Priorität: 19.06.87 DE 3720370

(43) Veröffentlichungstag der Anmeldung:
21.12.88 Patentblatt 88/51

(84) Benannte Vertragsstaaten:
FR GB IT NL SE

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Von Reith, Dirk, Dipl.-Ing.**
**Lohbekstieg 24**
**D-2000 Hamburg 54(DE)**

(54) **Wassersystem für eine Sanitäreinheit insbesondere an Bord eines Flugzeuges.**

(57) Bei einem Wassersystem für eine Sanitäreinheit mit einem Waschbecken und einer Toilette, insbesondere an Bord eines Flugzeuges, mit einem Frischwasseranschuß wobei mindestens eine Abwasserleitung mit einem zentralen Abwassertank verbunden ist, besteht die Erfindung darin, daß der Frischwasseranschluß (6) mit dem/den Wasserhahn/Wasserhähnen (2,3) des Waschbeckens (1) verbunden ist/sind und der Abfluß (10) des Waschbeckens (1) in einen Wassertank (8) mit einem ersten und einem zweiten Ausgang geführt ist, wobei der erste Ausgang (11) über eine Pumpe (12) mit den Spüldüsen (5) der Toilette (4) in Verbindung steht und ein durch einen ersten Füllstands-Sensor (13) steuerbares Ventil (14) in den Frischwasserzufluß (15) zum Tank (8) eingeschaltet ist. Hierdurch wird das für die Waschbecken vorgesehene Frischwasser doppelt genutz, indem es nach Passieren des Abflusses (10) noch zur Spülung der Toilette (4) verwendet wird. Demgemäß entfällt die Zuladung der gesamten die Toilettenspülung vor dem Start aufzunehmende Frischwassermenge, was eine deutliche Reduzierung der vor dem Start aufzunehmenden Frischwassermenge bedeutet.

Fig. 1

## Wasserstystem für eine Sanitäreinheit, insbesondere an Bord eines Flugzeuges

Die Erfindung bezieht sich auf ein System nach dem Oberbegriff des Anspruchs 1.

Sanitäreinheiten der vorgenannten Art weisen im wesentlichen ein Waschbecken und eine Toilette auf, wofür ein eigenes Wassersystem nicht vorgesehen ist. Derartige Einheiten sind üblicherweise an das zentrale Wassersystem des Flugzeuges angeschlossen, das u.a. einen Frischwassertank und einen Abwassertank aufweist, wobei möglicherweise bestimmte Abwässer, zum Beispiel aus der Bordküche über einen Drainmast nach außen geleitet werden. Hierbei wird das zur Verfügung stehende Frischwasser sowohl für das Waschbecken als auch für die Spülung der Toilette verwendet. Ein Langstreckenflugzeug wie die A 340 würde für einen 10 bis 14 stündigen Flug eine vor dem Start geschätzte aufzunehmende Frischwassermenge von ca. 656 ltr benötigen. Diese Menge teilt sich wie folgt auf:

80 ltr      für die Bordküchen.

360 ltr     für die Waschbecken und

216 ltr     für die Toilettenspülung.

Diese Frischwasserzuladung entspricht gewichtsmäßig ca. sieben Passagieren einschließlich Gepäck.

Demgemäß liegt der Erfindung die Aufgabe zugrunde, ein gattungsgemäßes System derart auszubilden, daß die vor dem Start aufzunehmende Frischwassermenge gegenüber bisherigen Lösungen deutlich reduziert wird.

Diese Aufgabe ist bei einem gattungsgemäßen System durch die kennzeichnenden Merkmale des Patentanspruchs 1 gelöst. Vorteilhafte Weiterbildungen der Erfindung sind in den Unteransprüchen angegeben.

Die Erfindung ist anhand der Zeichnung dargestellt und in der Beispielbeschreibung näher erläutert. Es zeigen

Fig.1 ein Wassersystem für eine Sanitäreinheit mit einem Anschluß für einen Drainmast und

Fig.2 ein Wassersystem nach Fig.1, jedoch ohne Anschluß für einen Drainmast.

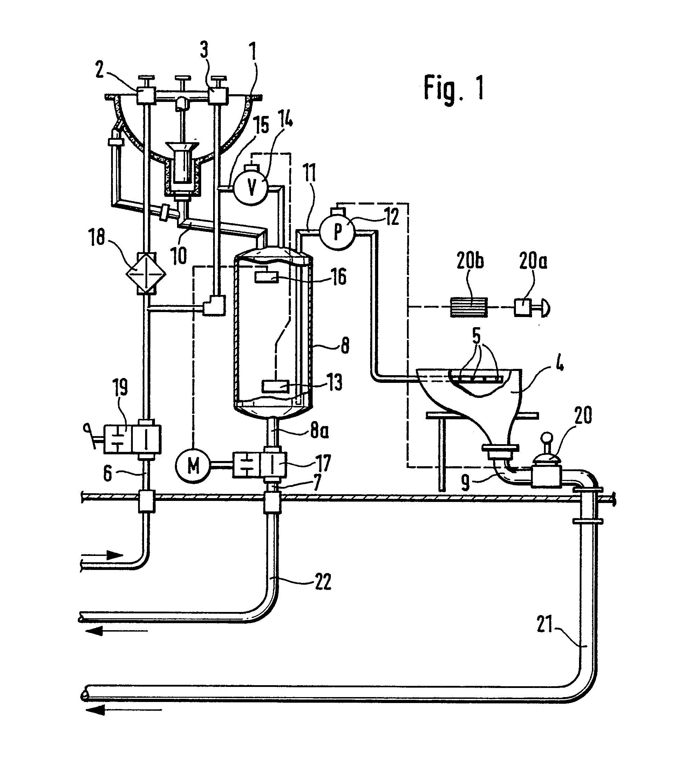

Figur 1 zeigt ein Wassersystm für eine Sanitäreinheit mit einem Waschbecken 1 mit Wasserhähnen 2 und 3 sowie mit einer Toilette 4 mit Spüldüsen 5, wie sie insbesondere an Bord eines Flugzeuges verwendet wird, wobei ein Frischwasseranschluß 6 im Prinzip mit den Wasserhähnen 2,3 des Waschbeckens 1 verbunden ist und der Abfluß 10 des Waschbeckens 1 in einen Wassertank 8 mit einem ersten Ausgang 11 und einem zweiten Ausgang 8a geführt ist, wobei der erste Ausgang 11 über eine Pumpe 12 mit den Spüldüsen 5 des Toilettenbeckens 4 in Verbindung steht. Ein durch einen ersten Füllstands-Sensor 13 steuerbares Ventil 14 ist in den Frischwasserzufluß 15 zum Tank 8 eingeschaltet. Der Tank 8 weist weiterhin einen zweiten Füllstands-Sensor 16 auf, der mit einem am Ausgang 8a des Tanks 8 angeordneten Ventil 17 in Wirkverbindung steht. Das System umfaßt ferner einen Durchlauferhitzer 18, der in die Frischwasserleitung zum Warmwasserhahn 2 eingeschaltet ist sowie ein weiteres von Hand zu betätigendes Ventil 19, wodurch der Frischwasserzulauf zum System abschaltbar ist. Dieses Abschalten des Frischwasserzulaufs ist für Wartungsarbeiten erforderlich. Zur Auslösung des Spülvorganges ist ein von Hand zu betätigender Schaltkontakt 20a vorgesehen, der über eine Elektronik-Einheit 20b mit einem zwischen den Abfluß 9 und die Abwasserleitung 21 geschalteten Auslaßventil 20 in Wirkverbindung steht. Hierdurch werden die Ansteuerungen der Pumpe 12 und des Ventils 20 während des Spülvorganges automatisch koordiniert. Das gezeigte Wassersystem für eine Sanitäreinheit ist an ein Flugzeugwassersystem angeschlossen, das außer dem zentralen Abwassertank auch einen Drainmast aufweist. Zum Befördern von Flüssigkeiten zum zentralen Abwassertank herrscht in diesem in der Luft und am Boden ein Unterdruck, wohingegen der Drainmast einen Unterdruck nur während des Fluges erzeugt.

Der Tank 8 faßt etwa 3 ltr, eine Wassermenge, die für etwa für 15 Spülungen ausreicht. Bei Beginn des Fluges braucht der Tank 8 nur eine relativ geringe, für die ersten Spülungen ausreichende Wassermenge aufzuweisen. Da bei Benutzung des Waschbeckens 1 das dabei anfallende Abwasser in den Wassertank 8 gelangt, wird dessen Vorrat immer wieder ergänzt. Beim Spülen, der Toilette 4 entnimmt die Pumpe 12 eine betimmte Wassermenge und gibt diese mit hinreichend hohem Druck an die Spüldüsen 5 ab. Um einen Stau im Abfluß 10 durch einen vollen Tank 8 zu vermeiden, wird das Ventil 17 geöffnet, sobald der Füllstands-Sensor 16 anspricht, wodurch das überschüssige Wasser über eine Abwasserleitung 22 zum Drainmast abgeleitet wird. Umgekehrt wird das Ventil 14 geöffnet wenn das der Füllstands-Sensor 13 einen zu niedrigen Füllstand signalisiert.

Bei diesem Wassersystem wird das für die Waschbecken vorgesehene Frischwasser doppelt genutzt, indem es nach Passieren des Abflusses 10 noch zur Spülung der Toilette 4 verwendet wird. Hierdurch entfällt die gesamte gemäß obiger Aufstellung für die Toilettenspülung vor dem Start aufzunehmende Frischwassermenge von ca. 216 ltr. Dies bedeutet eine deutliche Reduzierung der vor dem Start aufzunehmenden Frischwassermenge.

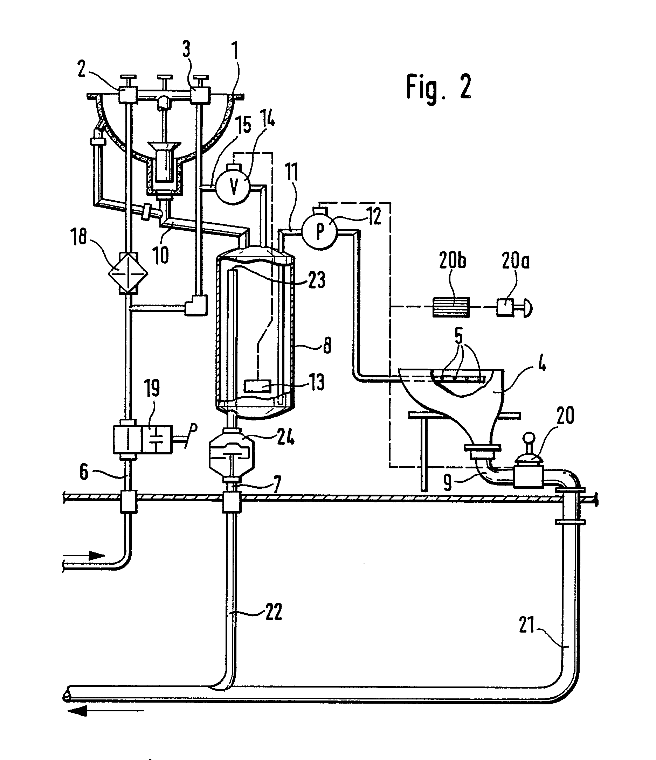

Figur 2 zeigt eine andere Ausgestaltung der Erfindung, wobei der Wassertank 8 einen Überlauf 23 aufweist, der über ein Membranventil 24 mit der Abwasserleitung 22 verbunden ist, wobei die übrigen Funktionseinheiten weitgehend mit denen der Fig. 1 übereinstimmen. Dabei ist die Abwasserleitung 22 an die zum zentralen Abwassertank führende Leitung 21 angeschlossen. Das Ventil 24 öffnet automatisch entgegen dem besagten Unterdruck, wenn der oberhalb des Ventils 24 befindliche Überlauf 23 mit Flüssigkeit gefüllt ist und schließt wieder, wenn diese Flüssigkeitssäule abgeflossen ist. Bei dieser Lösung kann der Wassertank 8, z.B. für Wartungsarbeiten, mittels der Pumpe 12 entleert werden.

Bei beiden Lösungen ist von Vorteil, daß das Gewicht der erfindungsgemäßen Zusatzeinbauten nur einen geringen Bruchteil der hierdurch entfallenden Wasserzuladung ausmacht.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

## Ansprüche

1. Wassersystem für eine Sanitäreinheit mit einem Waschbecken und einer Toilette, insbesondere an Bord eines Flugzeuges, mit einem Frischwasseranschluß wobei mindestens eine Abwasserleitung mit einem zentralen Abwassertank verbunden ist, dadurch **gekennzeichnet,** daß der Frischwasseranschluß (6) mit dem/den Wasserhahn/Wasserhähnen (2,3) des Waschbeckens (1) verbunden ist/sind und der Abfluß (10) des Waschbeckens (1) in einen Wassertank (8) mit einem ersten und einem zweiten Ausgang geführt ist, wobei der erste Ausgang (11) über eine Pumpe (12) mit den Spüldüsen (5) der Toilette (4) in Verbindung steht und ein durch einen ersten Füllstands-Sensor (13) steuerbares Ventil (14) in den Frischwasserzufluß (15) zum Tank (8) eingeschaltet ist.

2. System nach Anspruch 1, dadurch **gekennzeichnet,** daß der zweite Ausgang (8a) des Tanks (8) mit dem zentralen Abwassertank verbunden ist.

3. System nach Anspruch 1, dadurch **gekennzeichnet,** daß der zweite Ausgang (8a) des Tanks (8) mit einem Drainmast verbunden ist.

4. System nach einem der Ansprüche 1 bis 3, dadurch **gekennzeichnet,** daß der Tank (8) einen zweiten füllstands-Sensor (16) aufweist, der mit einem am Ausgang (8a) des Tanks (8) angeordneten. Ventil (17) in Wirkverbindung steht.

5. System nach einem der Ansprüche 1 bis 4, dadurch **gekennzeichnet,** daß der Tank (8) einen Überlauf (23) aufweist, der über ein Membranventil (24) mit der Abwasserleitung verbunden ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 286 922 (MONOGRAM INDUSTRIES INC.) <br> * Seite 2, Zeilen 17-31; Seite 4, Zeilen 9-23; Ansprüche 1,2; Figuren 1,2 * | 1-4 | B 64 D 11/02 <br> E 03 D 5/00 |
| A | --- | 5 | |
| A | US-A-3 318 449 (C.E. JENNINGS et al.) <br> * Spalte 1, Zeile 37 - Spalte 2, Zeile 28; Figur * <br> --- | 1,3 | |
| A | US-A-3 995 327 (J.R. HENDRICK) <br> * Figuren 1,2; Spalte 2, Zeilen 24-37; Spalte 3, Zeilen 35-38 * <br> --- | 1,5 | |
| A | US-A-4 357 719 (E.H. BADGER et al.) <br> --- | | |
| A | DE-A-2 336 744 (S. REINKE) <br> ----- | | |

RECHERCHIERTE
SACHGEBIETE (Int. Cl.4)

E 03 F
B 64 D
E 03 D
B 60 R
E 03 C

Der vorliegende Recherchenbericht wurde für alle Patentansprüche erstellt

| Recherchenort | Abschlußdatum der Recherche | Prüfer |
|---|---|---|
| DEN HAAG | 27-09-1988 | BIRD,C.J. |